(19) Europäisches Patentamt / European Patent Office / Office européen des brevets

(11) **EP 2 441 742 A1**

(12) **EUROPÄISCHE PATENTANMELDUNG**

(43) Veröffentlichungstag:
**18.04.2012 Patentblatt 2012/16**

(21) Anmeldenummer: **10187738.9**

(22) Anmeldetag: **15.10.2010**

(51) Int Cl.:
*C05D 9/00* (2006.01)    *B01J 20/06* (2006.01)
*B01J 20/28* (2006.01)    *B01D 53/14* (2006.01)
*C02F 1/28* (2006.01)    *C10L 3/10* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **LANXESS Deutschland GmbH
51369 Leverkusen (DE)**

(72) Erfinder: **Schlegel, Andreas, Dr.
47800 Krefeld (DE)**

(54) **Mittel zur Entfernung von Schwefelwasserstoff**

(57) Die Erfindung betrifft Mittel in stückiger Form enthaltend Eisenoxid und/oder Eisenoxidhydroxid, dadurch gekennzeichnet, dass das Mittel Spurenelementgehalte bezüglich Arsen von 80 ppm oder weniger, bezüglich Blei von 50 ppm oder weniger, und bezüglich Quecksilber von 1 ppm oder weniger, einen Restfeuchtegehalt von 0 bis 30 Gew.-% und eine Schüttdichte von 0,4 bis 2 glcm$^3$ aufweist, wobei mindestens 50 Gew.-% des Mittels eine Korngröße von >0,5 mm aufweisen, deren Verwendung zur Entschwefelung von Biogas in flüssigen und gasförmigen Medien, sowie Mischungen aus Biomasse und solchen Mittel und deren Verwendung als Dünger.

**EP 2 441 742 A1**

**Beschreibung**

Die Erfindung betrifft Mittel in stückiger Form enthaltend Eisenoxid und/oder Eisenoxidhydroxid, dadurch gekennzeichnet, dass das Mittel Spurenelementgehalte bezüglich Arsen von 80 ppm oder weniger, bezüglich Blei von 50 ppm oder weniger, und bezüglich Quecksilber von 1 ppm oder weniger, einen Restfeuchtegehalt von 0 bis 30 Gew.-% und eine Schüttdichte von 0,4 bis 2 $g/cm^3$ aufweist, wobei mindestens 50 Gew.-% des Mittels eine Korngröße von >0,5 mm aufweisen, deren Verwendung zur Entschwefelung von Biogas in flüssigen und gasförmigen Medien, sowie Mischungen aus Biomasse und solchen Mitteln und deren Verwendung als Dünger.

In den letzten 10-15 Jahren hat die Anzahl der Biogasanlagen stark zugenommen. In Biogasanlagen entsteht durch Vergärung kohlenstoffhaltiger organischer Masse ("Biomasse") Methangas ($CH_4$), nachfolgend auch Biogas genannt, welches in einem nachgeschalteten Blockheizkraftwerk zur Stromerzeugung dienen kann, oder als sog. "Bioerdgas" in das öffentliche Gasnetz eingespeist werden kann. Die Biomasse enthält jedoch immer auch einen gewissen Anteil organischer Schwefelverbindungen. Durch den Vergärungsprozess entstehen daher neben Methangas auch hohe Mengen an schädlichem Schwefelwasserstoff ($H_2S$). Der Schwefelwasserstoff muss aus dem Prozess entfernt werden, da es giftig ist, zudem zur Korrosion führt und bei der Verwendung als Bioerdgas den Verbrennungsprozess stört. Herkömmliche Methoden zur Biogasentschwefelung haben jedoch einige Nachteile.

Aus dem Stand der Technik sind folgende Verfahren zur Schwefelwasserstoffentfernung bekannt.

Bei der biologischen Entschwefelung wird kontinuierlich Luft (3-8 Vol-% der Biogasmenge) in den Gasraum des Fermenters oder in eine externe Entschwefelungseinheit eingeblasen. Mikroorganismen oxidieren $H_2S$ zu Schwefel. Bei der Vergärung von nachwachsenden Rohstoffen ist in der Regel die Entschwefelung im Fermenter ausreichend. Als Nachteil hat sich bei diesem Verfahren gezeigt, dass ein Anteil an Restschwefel im Biogas verbleibt. Ferner verbleiben im Biogas Sauerstoff und Stickstoff aus der Luft, was zu einem verminderten Heizwert und zu Störungen in der Methanbildung führt. Außerdem können durch die Beimischung von >6 % Luft bezogen auf das Biogas zündfähige Gemische entstehen, was ein starkes Sicherheitsrisiko bedeutet.

Bei der Entschwefelung durch Aktivkohle wird durch die katalytische Wirkung der Aktivkohle in Anwesenheit von Luft $H_2S$ zu Wasser und Schwefel umgesetzt. Nachteilig ist hierbei, dass man in einem anaeroben Fermentationsprozess auf die Anwesenheit von Luft angewiesen ist. Außerdem ist Aktivkohle relativ teuer und macht dadurch solche Verfahren unwirtschaftlich.

Die Entschwefelung durch eine oxidative alkalische Gaswäsche wird durch Adsorption des $H_2S$ an einem Eisen-Chelat-Komplex erreicht, wobei in wässriger Lösung elementarer Schwefel entsteht. Der Nachteil dieses Verfahrens ist ein separater nachgeschalteter Waschprozess, welcher sehr aufwändig zu steuern ist.

Auch mit bestimmten Molekularsieben kann Biogas entschwefelt werden. Dies gelingt z.B. mit Aluminiumsilicaten mit regehnäßiger Struktur. Die Selektion des adsorbierten Gases erfolgt über dessen Moleküldurchmesser. Allerdings sind diese Molekularsiebe relativ teuer, mit unvermeidbaren Verlusten.

Ein wichtiges Verfahren zur Entfernung von Schwefelwasserstoff aus Biogas ist die Chemisorption und Reaktion an Eisenoxid ($Fe_2O_3$) oder Eisenoxidhydroxid (FeOOH) als "Sorptions-/Reaktionsmittel".

Diese läuft nach folgender Reaktionsgleichung ab:

**Chemisorption und Reaktion:** $Fe_2O_3 + 3\,H_2S \rightarrow Fe_2S_3 + H_2O$;

Das bei der Chemisorption gebildete Eisen(III)sulfid ($Fe_2S_3$) kann durch Behandlung mit Sauerstoff in Gegenwart von Wasser wieder in Eisenoxid nach folgender Reaktionsgleichung umgewandelt werden

Regenerierung: $Fe_2S_3 + 3/2\,O_2 + H_2O \rightarrow Fe_2O_3 + 3\,S$

Da Biogasanlagen sehr häufig in landwirtschaftlichen Betrieben eingesetzt werden, werden dort in der Praxis die vergärte Biomasse zusammen mit dem verbrauchten Eisenoxid- oder Eisenoxidhydroxid-Adsorber als Dünger auf die Felder aufgebracht.

Gemäß dem Stand der Technik wird z. B. eisenoxidhaltiger Schlamm, z. B. aus Wasserwerken eingesetzt. Der Schlamm wird dem vergärenden Rohsubstrat beigemischt und bewirkt im Fermenter die Bindung des $H_2S$ an das Eisenoxid. Wird Eisenoxid oder Eisenoxidhydroxid direkt in den Fermenter dosiert, so kann das dort gelöste Sulfid an der Oberfläche des reaktiven Materials gebunden werden.

Auch mittels getrockneten eisenoxidhaltiger Wasserwerksschlämmen oder natürlich vorkommenden Eisenoxiden oder industriellen Eisenoxidanfällen (z. B. Rotschlämmen) kann prinzipiell Schwefelwasserstoff in Biogasfermentern entfernt werden.

Allerdings ist bei beiden Substanzklassen in der Regel der Eisengehalt sehr niedrig, was zu einer niedrigen Wirksamkeit führt, da die Wirksamkeit der Schwefelwasserstoffentfernung mit dem Eisengehalt eines Adsorbers zunimmt. Da die Eisengehalte in diesen beiden Substanzklassen auch stark schwankt, ist auch deren Wirksamkeit bezüglich der Entfernung von Schwefelwasserstoff schwankend.

Wasserwerksschlämme (und natürlich vorkommenden Eisenoxide) enthalten je nach Herkunft häufig hohe Schwermetallgehalte und andere toxische Verbindungen. Dies ist nachteilig, da die fermentierte Biomasse, die mit den schwermetallhaltigen Wasserwerksschlämmen oder den natürlich vorkommenden Eisenoxiden vermischt sind, als Dünger eingesetzt werden. Dabei können die Schwermetalle und die toxischen Verbindungen als Verunreinigungen über das verbrauchte Eisenoxid in den Boden und von da aus in die Nahrungskette gelangen. Zudem können die Verunreinigungen des Eisenoxides eine Verminderung der biologischen Aktivität der Bakterien, die an der Fermentation beteiligt sind, bewirken.

Drittens ist bei Auslieferung des Mittels als Pulver eine starke Staubbelastung gegeben. In der Regel gibt der Biogasanlagenbetreiber, meistens der Landwirt selbst, mittels einer Schaufel die Biomasse täglich zusammen mit dem Mittel über einen Eintragstrichter in den Fermenter. Der Eintragstrichter über dem Fermenter befindet sich in der Regel im Freien und ist Wind und Wetter ausgesetzt. Der Einsatz von pulverförmigen Eisenoxiden würde beim Eintrag in den Fermenter zu einer erheblichen nicht tolerierbaren Staubbelastung auf dem gesamten Bauernhof führen.

Auch synthetische Eisenoxidpigmente, welche aufgrund ihrer Anwendungsbestimmung, der Einfärbung von Baustoffen oder in Farben und Lacken, eine hohe Dispergierbarkeit und daher eine hohe Partikelfeinheit besitzen müssen, sind aufgrund der Staubbildung nicht geeignet.

Anstatt der Eisenoxide können auch Eisensalze ($FeCl_2$, $FeCl_3$) zum Fermenter dosiert werden. Nachteilig bei der Verwendung von Eisensalzen ist, dass es sich dabei um stark ätzende Chemikalien handelt. Somit handelt es sich um Gefahrstoffe, die nach nationalen Verordnungen, wie zum Beispiel der Gefahrstoffverordnung (GefStoffV) in Deutschland als solche klassifiziert werden müssen. Es kommt zudem zur Korrosion der Anlagen, in denen die Eisensalze eingesetzt werden. Zudem sind manche Salzlösungen als wassergefährdend eingestuft, was wieder zu Problemen bei der Entsorgung und erhöhten Kosten bei der Lagerung führt. Ein fachgerechtes Handling derartiger Chemikalien durch einen Landwirt auf einem Bauernhof ist also nicht ohne weiteres gegeben.

Weiterhin ist die Anwendung von eisenhydroxidhaltigen Suspensionen zur Bindung von Schwefelwasserstoff in wässrigen Medien beschrieben, wie z.B, in der DE10204488 A1. Die Anwendung einer Suspension hat jedoch den Nachteil der hohen Transportkosten infolge des hohen Wassergehaltes. Das wirksame Eisenhydroxid liegt nur in geringer Konzentration vor und es müssen große Mengen Flüssigkeit bewegt werden. Dadurch wird der Fermenterinhalt stark durch Wasser verdünnt. Zudem weist die in der DE10204488 A1 beschriebene Eisenhydroxidsuspension einen pH-Wert von 1 bis 3,5 auf. Somit handelt es sich um eine stark ätzende Chemikalie, also um einen Gefahrstoff Ein fachgerechtes Handling derartiger Chemikalien durch einen Biogasanlagenbetreiber, etwa einem Landwirt auf einem Bauernhof, ist nicht ohne weiteres gegeben.

Der Erfindung lag daher die Aufgabe zugrunde, ein Mittel zur Entfernung von Schwefelwasserstoff aus Gasen, z.B. Biogas, und/oder Flüssigkeiten bereitzustellen, welches die Nachteile des Standes der Technik nicht aufweist.

Es wurde nun gefunden, dass Mittel in stückiger Form enthaltend Eisenoxid und/oder Eisenoxidhydroxid, dadurch gekennzeichnet, dass das Mittel Spurenelementgehalte bezüglich Arsen von 80 ppm oder weniger, bevorzugt von 40 ppm oder weniger, besonders bevorzugt von 20 ppm oder weniger, bezüglich Blei von 50 ppm oder weniger, und bezüglich Quecksilber von 1 ppm oder weniger, einen Restfeuchtegehalt von 0 bis 30 Gew.-% und eine Schüttdichte von 0,4 bis 2 $g/cm^3$ aufweist, wobei mindestens 50 Gew.-% des Mittels eine Korngröße von >0,5 mm aufweisen, diese Aufgabe lösen.

Es sei darauf hingewiesen, dass vom Umfang der Erfindung auch beliebige Kombinationen der genannten Bereiche und Vorzugsbereiche für jedes Merkmal einschließlich von Kombinationen von Vorzugsbereichen umfasst sind.

Insbesondere weisen die erfindungsgemäßen Mittel weiterhin
Gehalte von:

- Cadmium: 1,5 ppm oder weniger
- Chrom(VI): 2 ppm oder weniger
- Nickel: 120 ppm oder weniger, bevorzugt von 80 ppm oder weniger, besonders bevorzugt von 50 ppm oder weniger,
- Thallium: 1 ppm oder weniger

auf, wobei jedes Element für sich in beliebiger Kombination in oben genannten Mengen enthalten sein kann oder jeweils nicht,
und gegebenenfalls einen Gehalt an perfluorierten Tensiden von 0,1 ppm oder weniger auf.

Unter die Gruppe der Eisenoxide fallen im Sinne der Erfindung Eisen(III)oxide aller möglicher Phasen, wie z.B. Hämatit ($\alpha$-$Fe_2O_3$), Maghemit ($\gamma$-$Fe_2O_3$) oder Eisen(II)-Eisen(III)-oxide wie Magnetit ($Fe_3O_4$).

Unter die Gruppe der Eisenoxidhydroxide fallen im Sinne der Erfindung Eisen(III)oxidhydroxide aller möglicher Phasen, wie z.B. Goethit ($\alpha$-FeOOH) oder Lepidokrokit ($\gamma$-FeOOH).

Das erfindungsgemäße Mittel liegt in stückiger Form vor. Unter "Mittel in stückiger Form" werden Agglomerate von Primärpartikeln verstanden, die sich von der Größe her von der der Primärpartikel unterscheiden. Unter "Mittel in stückiger Form" werden auch Granulate verstanden. Unter "Granulat" bzw. "in Granulatform" wird im Kontext der Erfindung jedes Material verstanden, dessen mittlere Korngröße im Vergleich mit den Ausgangsmaterialien durch einen Behandlungsschritt vergrößert worden ist. "Granulat" bzw. "in Granulatform" umfasst daher nicht nur Sprühgranulate, Kompaktierungsgranulate (Press- oder Brikettiergranulate) oder Aufbaugranulate, sondern auch zum Beispiel Produkte einer Nass- oder Feuchtbehandlung mit anschließender Zerkleinerung, und Produkte trockener oder im Wesentlichen trockener Verarbeitungsschritte, zum Beispiel trocken hergestellte Granulate, Briketts und dergleichen. Bevorzugt sind die erfindungsgemäßen Mittel Aufbaugranulate, besonders bevorzugt welche, die über Granuliertrockner hergestellt werden.

Aus der Gruppe der Eisenoxide und/oder Eisenoxidhydroxide sind Eisenoxidhydroxide, speziell $\alpha$-FeOOH, bevorzugter Bestandteil der erfmdungsgemäßen Mittel. Bevorzugt sind somit Mittel in stückiger Form enthaltend Eisenoxidhydroxid, ganz besonders bevorzugt $\alpha$-FeOOH, dadurch gekennzeichnet, dass das Mittel Spurenelementgehalte bezüglich Arsen von 80 ppm oder weniger, bevorzugt von 40 ppm oder weniger, besonders bevorzugt von 20 ppm oder weniger, bezüglich Blei von 50 ppm oder weniger, und bezüglich Quecksilber von 1 ppm oder weniger, einen Restfeuchtegehalt von 0 bis 30 Gew.-% und eine Schüttdichte von 0,4 bis 2 g/cm$^3$ aufweist, wobei mindestens 50 Gew.-% des Mittels eine Korngröße von >0,5 mm aufweisen.

Das erfindungsgemäße Mittel in stückiger Form kann gegebenenfalls Hilfsmittel aus der Gruppe der Bindemittel, Dispergieradditive oder Mahlhilfsmittel, z.B. organische Oligo- oder Polyhydroxiverbindungen, enthalten oder nicht. Bevorzugt sind keine Hilfsmittel oder von mehr als 0 bis 5 Gew.-% Hilfsmittel, besonders bevorzugt von 0,1 bis 3 Gew.-% Hilfsmittel, ganz besonders bevorzugt von 0,2 bis 2 Gew.-% Hilfsmittel bezogen auf das Gesamtgewicht des Mittels. Die Hilfsmittel haben keinen Einfluss auf die Schwefelwasserstoff-Adsorption des Mittels, können jedoch die Herstellung des erfindungsgemäßen Mittels in stückiger Form, wie z.B. den Granulationsprozess günstig beeinflussen.

Die erfindungsgemäßen Mittel in stückiger Form bestehen daher bevorzugt im Wesentlichen aus Eisenoxid und/oder Eisenoxidhydroxid, dadurch gekennzeichnet, dass das Mittel Spurenelementgehalte bezüglich Arsen von 80 ppm oder weniger, bevorzugt von 40 ppm oder weniger, besonders bevorzugt von 20 ppm oder weniger, bezüglich Blei von 50 ppm oder weniger, und bezüglich Quecksilber von 1 ppm oder weniger, einen Gehalt an Hilfsmittel aus der Gruppe der Bindemittel, Dispergieradditive und/oder Mahlhilfsmittel von 0 oder von mehr als 0 bis 5 Gew.-% , einen Restfeuchtegehalt von 0 bis 30 Gew.-% und eine Schüttdichte von 0,4 bis 2 g/cm$^3$ aufweist, wobei mindestens 50 Gew.-% des Mittels eine Korngröße von >0,5 mm aufweisen. "Im Wesentlichen bestehend aus" bedeutet, dass die Summe aus Eisenoxid und/oder Eisenoxidhydroxid, Wasser und Hilfsmittel mehr als 90 Gew. %, bevorzugt mehr als 95 Gew. %, besonders bevorzugt mehr als 97 Gew. % bezogen auf das Gesamtgewicht des Mittels beträgt.

Besonders bevorzugt bestehen die erfindungsgemäßen Mittel in stückiger Form im Wesentlichen aus Eisenoxidhydroxid, ganz besonders bevorzugt aus $\alpha$-FeOOH, dadurch gekennzeichnet, dass das Mittel Spurenelementgehalte bezüglich Arsen von 80 ppm oder weniger, bevorzugt von 40 ppm oder weniger, besonders bevorzugt von 20 ppm oder weniger, bezüglich Blei von 50 ppm oder weniger, und bezüglich Quecksilber von 1 ppm oder weniger, einen Gehalt an Hilfsmittel aus der Gruppe der Bindemittel, Dispergieradditive und/oder Mahlhilfsmittel von 0 oder von mehr als 0 bis 5 Gew.-%, einen Restfeuchtegehalt von 0 bis 30 Gew.-% und eine Schüttdichte von 0,4 bis 2 g/cm$^3$ aufweist, wobei mindestens 50 Gew.-% des Mittels eine Korngröße von >0,5 mm aufweisen.

In den erfindungsgemäßen Mitteln weisen beispielsweise mindestens 80 Gew.-% des Mittels Korngrößen von 0,1 bis 7 mm, bevorzugt von 0,1 bis 5 mm, besonders bevorzugt von 0,2 - 4 mm auf. Dabei weisen mindestens 50 Gew.-% des Mittels eine Korngröße von >0,5 mm auf.

Der Gehalt an Spurenelementen und an perfluorierten Tensiden wird in ppm (parts per million) angegeben und bezieht sich jeweils auf den Massenanteil der Verunreinigung im Verhältnis auf das Gesamtgewicht des Mittels. 1 ppm entspricht somit 0,0001 Gew.-% oder 1 $\mu$g Verunreinigung / g Mittel.

Die erfindungsgemäßen Mittel in stückiger Form weisen beispielsweise spezifische Oberflächen von <300 m$^2$/g, bevorzugt von <50 m$^2$/g, besonders bevorzugt von zwischen 8 und <50 m$^2$/g, und ganz besonders bevorzugt von 8 bis 25 m$^2$/g, auf. Bei Mitteln basierend auf $\alpha$-FeOOH liegt sie bei <50 m$^2$/g, bevorzugt zwischen 8 und <50 m$^2$/g, und besonders bevorzugt von 8 bis 25 m$^2$/g. Die spezifischen Oberflächen werden nach der BET-Einpunkt Methode gemäß DIN 66 131 gemessen.

Das erfindungsgemäße Mittel in stückiger Form kann vorteilhaft zur Entfernung von Schwefelwasserstoff aus gasförmigen Medien verwendet werden. Gasförmige Medien sind z.B. Gase, die in Verbrennungsprozessen eingesetzt werden, z.B. Erdgas oder Biogas. Bevorzug ist das gasförmige Medium Biogas Das erfindungsgemäße Mittel in stückiger Form wird bevorzugt in Biogasfermentern verwendet.

Das erfindungsgemäße Mittel in stückiger Form kann darüber hinaus auch vorteilhaft zur Entfernung von Schwefelwasserstoff, anorganischen oder organischen Sulfiden aus flüssigen Medien, wie z.B. Speiseölen oder flüssigen Kohlenwasserstoffen oder Erdölen verwendet werden.

Bei der Verwendung zur Entfernung von Schwefelwasserstoff aus gasförmigen und flüssigen Medien hat das erfindungsgemäße Mittel in stückiger Form den Vorteil, dass es in fester Form und zudem staubfrei geliefert werden kann. Es ist nicht giftig, nicht ätzend und durch die stückige Form ist es zudem leicht und staubfrei zu dosieren.

Zudem weist das erfindungsgemäße Mittel in stückiger Form einen niedrigen Gehalt an Spurenelementen wie Arsen, Blei und Quecksilber auf und kann im Gegensatz zu natürlichen eisenhaltigen Verbindungen unter streng kontrollierten Bedingungen hergestellt werden. Dadurch ist eine gleichbleibende Qualität gewährleistet. Überraschenderweise wurde festgestellt, dass die biologische Aktivität der in der Biomasse befindlichen Bakterien, die an der Fermentation beteiligt sind, in Anwesenheit der erfindungsgemäßen Mittel weniger reduziert wird als in Anwesenheit von Eisenoxiden und/oder Eisenoxidhydroxiden, in denen der Gehalt zumindest eines der vorgenannten Spurenelemente den Gehalt des betreffenden vorgenannten Spurenelements im erfindungsgemäßen Mittel übertrifft.

Zusätzlich zu den obengenannten Vorteilen weisen die erfindungsgemäßen Mittel in stückiger Form eine hohe Adsorptionskapazität gegenüber Schwefelwasserstoff auf. Das erfindungsgemäße Mittel in stückiger Form entfernt Schwefelwasserstoff schnell und wirksam, sobald es mit ihm in Kontakt kommt. Das erfindungsgemäße Mittel in stückiger Form hat einen hohen Eisengehalt und zeigt dadurch eine hohe Reaktivität und einen hohen Umsatz. Die Dosierungsmenge kann man den entstehenden Mengen Schwefelwasserstoff anpassen. Untersuchungen haben gezeigt, dass bei einem typischen Fermenter Dosierungen von wenigen Kg des erfindungsgemäßen Mittels pro Tag zu einer ausreichenden Entfernung des Schwefelwasserstoffs führen kann. Überraschenderweise zeigen auch die erfindungsgemäßen Mittel in stückiger Form mit einer niedrigen spezifischen Oberfläche von kleiner als 50 $m^2$/g eine hohe Adsorptionskapazität gegenüber Schwefelwasserstoff.

Weiterhin betrifft die Erfindung ein Verfahren zur Abreicherung von Schwefelwasserstoff in Biogas umfassend zumindest das Inkontaktbringen des erfindungsgemäßen Mittels in stückiger Form mit zu fermentierender Biomasse. Durch das Inkontaktbringen des erfindungsgemäßen Mittels in stückiger Form mit der zu fermentierenden Biomasse wird erreicht, dass der aus der Biomasse entweichende Schwefelwasserstoff direkt mit dem erfindungsgemäßen Mittel in Kontakt kommt, wodurch der Schwefelwasserstoff an das Mittel gebunden wird. Zusätzlich werden durch den Kontakt der zu fermentierenden Biomasse mit dem erfindungsgemäßen Mittel in der Fermentationsbrühe gelöste anorganische Sulfide an das erfindungsgemäße Mittel gebunden. Nach Beendigung des Fermentationsprozesses kann die Biomasse, die das Mittel enthält, dem Biogasreaktor entnommen werden. Das Mittel enthält dann einen Anteil an chemisch gebundenem Sulfid in Form von Eisensulfid Der Anteil an chemisch gebundenem Sulfid beträgt beispielsweise 0,1 bis 20 mmol Sulfid/g Mittel, bevorzugt 0,2 bis 7 mmol Sulfid/g Mittel, besonders bevorzugt 0,5 bis 5 mmol Sulfid/g Mittel.

Die Erfindung betrifft somit ebenfalls Mischungen enthaltend - gegebenenfalls fermentierte - Biomasse und Eisenoxid und/oder Eisenoxidhydroxid, dadurch gekennzeichnet, dass das in der Mischung enthaltene Eisenoxid und/oder Eisenoxidhydroxid Spurenelementgehalte bezüglich Arsen von 80 ppm oder weniger, bevorzugt von 40 ppm oder weniger, besonders bevorzugt von 20 ppm oder weniger, bezüglich Blei von 50 ppm oder weniger, und bezüglich Quecksilber von 1 ppm oder weniger, aufweist. Insbesondere weist das in der Mischung enthaltene Eisenoxid und/oder Eisenoxidhydroxid weiterhin Gehalte von:

- Cadmium: 1,5 ppm oder weniger
- Chrom(VI): 2 ppm oder weniger
- Nickel: 120 ppm oder weniger, bevorzugt von 80 ppm oder weniger, besonders bevorzugt von 50 ppm oder weniger,
- Thallium: 1 ppm oder weniger

auf, wobei jedes Element für sich in beliebiger Kombination in oben genannten Mengen enthalten sein kann oder jeweils nicht,

und gegebenenfalls einen Gehalt an perfluorierten Tensiden von 0,1 ppm oder weniger auf.

Die Biomasse umfasst dabei alle zu fermentierenden Produkte, die in biologischen Anlagen, wie z.B. in Fermentern oder in Biogasanlagen, umgesetzt werden beziehungsweise die betreffenden bereits teilweise oder vollständig fermentierten Produkte. Die Mittel können sich dabei sowohl in ihrem ursprünglichen Zustand, in dem sie noch nicht mit Schwefelwasserstoff in Kontakt gekommen sind, als auch im beladenen Zustand, in dem sie bereits teilweise oder vollständig mit Schwefelwasserstoff in Kontakt gekommen sind, befinden.

Die Erfindung betrifft ferner die Verwendung der erfindungsgemäßen Mischung als Dünger. Anstatt das Mittel aufwändig von der Biomasse zu trennen, kann die erfindungsgemäße Mischung aus der Biomasse und des Mittels nach Beendigung der Fermentation gemeinsam als Dünger zum Beispiel auf Bodenflächen aufgebracht werden.

Die Erfindung betrifft außerdem ein Verfahren zur Herstellung der erfindungsgemäßen Mittel in stückiger Form.

Die Primärpartikel der erfindungsgemäßen Mittel können nach unterschiedlichen chemischen Verfahren hergestellt werden, z.B. durch Fällverfahren, Penniman-Verfahren, Lauxverfahren, Sprühröstverfahren, Calcination. Siehe hierzu etwa: Kapitel 3.1.1. ff. in Industrial Inorganic Pigments, Ed. G. Buxbaum; G. Pfaff; 2005 Wiley Verlag GmbH & Co. KGaA, Weinheim.

Bevorzugt werden die Primärpartikel des erfindungsgemäßen Mittel nach dem Penniman-Verfahren hergestellt. Hier werden Eisenoxide und/oder Eisenoxidhydroxide über die Reaktion von Eisen(II)salzen mit metallischen Eisen unter oxidativen Bedingungen hergestellt. Besonders bevorzugt ist die Herstellung von α-FeOOH nach dem Penniman-Verfahren.

Durch Selektion der Rohstoffe im Herstellungsprozess, z. B. des Eisensulfats im Fällprozess oder ausgewählter Eisenmetall-Qualitäten und Eisensalz-Qualitäten für den Penniman-Prozess, erreicht man, dass die daraus resultierenden Primärpartikel sehr niedrige Schwermetallgehalte aufweisen.

Die erfindungsgemäßen Mittel in stückiger Form werden dann aus den Primärpartikeln, die in der Regel als feines Pulver vorliegen, wie anhand eines Beispiels wie folgt hergestellt.

Eisenoxid-Gelbpigmentpulver (α-FeOOH) wird mit Wasser zu einer Paste oder zu einer Suspension mit einem Feststoffgehalt von ca. 10-50 % gemischt, oder liegt bereits als Filterpaste aus einem dem Primärpartikelherstellungsprozess nachgeschalteten Filtrationsprozess vor.

Die Paste wird anschließend granuliert und getrocknet. In Frage kommen im Prinzip alle gängigen Granulationsverfahren. Bevorzugt wird eine Granulierung bei gleichzeitiger Trocknung in einem Granuliertrockner durchgeführt. Granuliertrockner verschiedenster Art sind dem Fachmann bekannt wie z.B. Drehrohrtrockner oder Wirbelschicht-Granuliertrockner.

Die Granulationsbedingungen können so gewählt werden, dass Granulate erzeugt werden können, bei denen beispielsweise mindestens 80 Gew.-% des Granulates Korngrößen von 0,1 bis 7 mm, bevorzugt von 0,1 bis 5 mm, besonders bevorzugt von 0,2 - 4 mm aufweisen. Dabei weisen mindestens 50 Gew.-% des Mittels eine Korngröße von >0,5 mm auf. Die erfindungsgemäßen Mittel in stückiger Form sind verglichen mit Pulvern sehr hart. Sie weisen einen Restfeuchtegehalt von 0 Gew.-% oder von mehr als 0 bis 30 Gew.-% auf. Ein Restfeuchtegehalt von mehr als 0 Gew.-% wird ermöglicht, wenn man die Trocknung beim Granulierprozess nicht vollständig ausführt.

Der Zusatz von geringen Mengen Bindemittel, Dispergieradditiven oder Mahlhilfsmitteln vor oder während des Granulierprozesses ist möglich.

Die resultierenden Granulate sind so hart, so dass sie für den üblichen Pigmenteinsatz nur schlecht geeignet sind. Die Farbstärkeentwicklung während der Dispergierzeit in einem Baustoff zeigt nach 300 sec. Rühren im Tonimischer erst eine Farbstärke von 50 bis 80%, bezogen auf eine Farbstärke von 100% nach 120 sec Dispergierzeit eines pulverförmigen Standard-Gelbpigments. In einem Biogasfermenter werden die erfindungsgemäßen Mittel jedoch durch die Bewegungen des Rührwerkes zusammen mit der Biomasse bewegt, so dass ausreichend Kontaktzeit für die Reaktion mit Schwefelwasserstoff vorhanden ist. Überraschenderweise wurde festgestellt, dass sich die Mittel in stückiger Form leichter auflösen, wenn sie einen Restfeuchtegehalt von mindestens 2 Gew.-% besitzen, also nicht bis auf 0 Gew.-% Restfeuchte getrocknet werden. Die Restfeuchte der erfindungsgemäßen Mittel beträgt 0 Gew.-% oder von mehr als 0 bis 30 Gew.-%, bevorzugt zwischen 2 und 30 Gew.-%, besonders bevorzugt zwischen 5 und 20 Gew.-% und ganz besonders bevorzugt zwischen 10-18 Gew.-%. Durch die Restfeuchte ist der Staubanteil noch weiter eingedämmt, als dies beim vollständig getrockneten Produkt der Fall ist.

Eine hohe Schüttdichte des erfindungsgemäßen Mittel in stückiger Forms ist von Vorteil, da das Lagervolumen und das dem Fermenter zugegebene Volumen dadurch geringer ist. Die erfindungsgemäßen Mittel in stückiger Form weisen eine Schüttdichte von 0,4 bis 2 g/cm$^3$, bevorzugt von 0,8 bis 1,8 g/cm3, besonders bevorzugt von 1,2 bis 1,6 g/cm$^3$ auf.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Die Erfindung wird anhand der nachfolgenden Beispiele näher erläutert.

**Beispiele:**

**Beispiel 1: Herstellung eines Mittels auf Basis von Eisenoxidhydroxid:**

Eine wässrige Paste eines α-FeOOH-Gelbpigmentes, das nach dem Penniman-Vefahren hergestellt wurde, mit einem Feststoffgehalt von ca. 50 % wird in einem handelsüblichen Drehrohrtrockner über einen Schneckeförderer eingetragen, bei einer Innentemperatur von 150 °C getrocknet und dabei gleichzeitig granuliert. Die resultierenden Granulate werden aus einem Auslassstutzen ausgetragen.

Analysen verschiedener Proben von Eisenoxidhydroxidgranulaten sind in Tabelle 1 zusammengefasst. Die Bestimmung der Restfeuchte erfolgte mittels einer IR-Waage der Fa. Mettler.

**Tabelle 1:**

| | | Probe 1 | Probe 2 | Probe 3 | Probe 4 | Probe 5 | Probe 6 | Probe 7 | Probe 8 | Probe 9 |
|---|---|---|---|---|---|---|---|---|---|---|
| Fe-Gehalt | % | 51,8 | 53,3 | 51,6 | 51,6 | 51,8 | 51,7 | 51,8 | 53,3 | 51 |
| Schüttdichte | g/cm$^3$ | 1,47 | 1,47 | 1,45 | 1,47 | 1,43 | 1,47 | 1,49 | 1,54 | 1,45 |
| wasserlösliche Anteile | % | 0,21 | 0,23 | 0,24 | 0,25 | 0,20 | 0,23 | 0,23 | 0,26 | 0,23 |
| Restfeuchte | % | 16,0 | 13,8 | 15,3 | 15,3 | 15,5 | 16,2 | 15,9 | 14,7 | 17,5 |
| Spez. Oberfläche (BET) | m$^2$/g | 13,7 | 14,0 | 14,4 | 14,6 | 14,2 | 14,2 | 14,5 | 15,0 | 13,6 |
| Elementanalyse | | | | | | | | | | |
| As | mg/kg | 12 | | | | 12 | | | | 12 |
| Cd | mg/kg | <0,1 | | | | <0,1 | | | | <0,1 |
| Cu | mg/kg | 68 | | | | 66 | | | | 71 |
| Hg | mg/kg | <0,2 | | | | <0,2 | | | | <0,2 |
| Ni | mg/kg | 17 | | | | 17 | | | | 17 |
| Pb | mg/kg | 2 | | | | 2 | | | | 2 |

| | | Probe 1 | Probe 2 | Probe 3 | Probe 4 | Probe 5 | Probe 6 | Probe 7 | Probe 8 | Probe 9 |
|---|---|---|---|---|---|---|---|---|---|---|
| Tl | mg/kg | <1 | | | | <1 | | | | <1 |
| Siebanalyse | | | | | | | | | | |
| <0,5mm | % | 2,7 | 3,3 | 0,1 | 15,4 | 1,9 | 3,0 | 4,8 | 27,5 | 15,1 |
| >0,5 - <2mm | % | 55,6 | 67,2 | 24,3 | 77,5 | 34,5 | 59,1 | 65,3 | 54,6 | 55,4 |
| >2mm | % | 41,7 | 29,5 | 75,6 | 7,1 | 63,6 | 37,9 | 29,8 | 17,8 | 29,5 |

**Beispiel 2: H$_2$S-Entfernung:**

Zur besseren Bestimmung der Entfernung von Schwefelwasserstoff in wässrigen Systemen wird zunächst eine Natriumsulfid-Lösung hergestellt, aus der dann durch Neutralisation mit Salzsäure der Schwefelwasserstoff freigesetzt wird.

Der Versuch wurde in 500 ml Batchgefäßen, welche mit je 500 ml Suspension befüllt wurden, durchgeführt. Zum Verschließen der Batchgefäße wurden luftdichte Schraubverschlüsse aus Kunststoff (z.B. BOLA-Verschraubungen der Firma Bohlender GmbH) genutzt. So konnte der Zutritt von Luftsauerstoff stark eingeschränkt werden. Die Feststoffeinwaagen sind Tabelle 2 zu entnehmen.

**Tabelle 2:** spezifische Oberfläche des Feststoffes und Feststoffeinwaagen

| | spezifische Oberfläche (BET) | Feststoffeinwaage | Volumen Wasser |
|---|---|---|---|
| Mittel in stückiger Form | A in m$^2$/g | m$_{Feststoff}$ in g | V$_{Wasser}$ in mL |
| Eisenoxidhydroxid-Granulat | 25,9 | 0,50 | 500 |

Zur Herstellung der Sulfidlösung wurden 4,66 g Na$_2$S (mit ca. 75% Wasseranteil) eingewogen und mit Leitungswasser auf 3 1 aufgefüllt (Stammlösung). Anschließend wurde die Lösung mit 0,1 M HCl neutralisiert und das neutrale Milieu mittels pH-Teststreifen überprüft. Jeweils 500 mL der neutralisierten Stammlösung wurden in die Batchgefäße mit der Feststoffeinwaage überführt, luftdicht verschlossen und kräftig geschüttelt. Ein Blindansatz ohne reaktives Material wurde parallel geführt.

Die Ausgangssulfidkonzentration wurde als Doppelbestimmung in der Stammlösung gemessen. Im Versuchsverlauf über insgesamt 48 h erfolgte die Probenahme nach 5, 24 und 48 h.

Die Sulfidanalytik und die anschließende Datenauswertung:

Die Sulfidkonzentration wurde zu Beginn und am Versuchsende photometrisch bestimmt. Während des Versuches wurden die Batchansätze kontinuierlich geschüttelt (Überkopf- oder Kreisschüttler). Die Beladung des Feststoffes konnte dann über die Sulfidkonzentrationsdifferenz in der wässrigen Lösung und der Feststoffeinwaage ausgewiesen werden. Zur Kontrolle wurde in der Regel ein Blindwert (Sulfidlösung ohne Feststoff) parallel mitgeführt. Die Feststoffbeladung ergibt sich nach der Gleichung:

$$q = \frac{n_{Sulfid,start} - n_{Sulfid,Ende}}{m_{Feststoff}}$$

q = Schwefelbeladung [mmol Sulfid/g Feststoff]

n(Sulfid,Start) = Stoffmenge Sulfid im Batchgefäß zu t=0 [mmol]

n(Sulfid,Ende) = Stoffmenge Sulfid im Batchgefäß zu t=Ende [mmol]

m(Feststoff) = Masse des Eisenoxidhydroxides im Batchgefäß [g]

Zur Überprüfung dieser Methode wurde in einem Versuchsdurchgang die Sulfid-Beladung des Feststoffes parallel über einen nasschemischen Aufschluss mit anschließender Elementaranalytik bestimmt.

Nach einer Versuchsdauer von 5 Minuten wurde bereits eine schwarze Verfärbung des Materials erkennbar. Nach 5 h Stunden war der Ansatz vollständig schwarz verfärbt, was ein Hinweis auf die Bildung von Eisensulfiden war.

Die Sulfidkonzentration sinkt innerhalb von 48 h von 5,3 mmol/L (169,6 mg Sulfid/L) auf 2,5 mmol/L (Eisenoxidhydroxid-Granulat). Die Sulfidelimination im Ansatz mit Eisenoxidhydroxid-Granulat erreicht zum Versuchsabschluss ca. 53%.

Mit dem Eisenoxidhydroxid-Granulat wurde nach 48 h (und nach Abzug des Sulfidverlustes im Blindwert) eine Sulfid-Beladung von 1,0 mmol Sulfid/g Feststoff erreicht.

**Patentansprüche**

1. Mittel in stückiger Form enthaltend Eisenoxid und/oder Eisenoxidhydroxid, **dadurch gekennzeichnet, dass** das Mittel Spurenelementgehalte bezüglich Arsen von 80 ppm oder weniger, bezüglich Blei von 50 ppm oder weniger, und bezüglich Quecksilber von 1 ppm oder weniger, einen Restfeuchtegehalt von 0 bis 30 Gew.-% und eine Schüttdichte von 0,4 bis 2 g/cm$^3$ aufweist, wobei mindestens 50 Gew.-% des Mittels eine Korngröße von >0,5 mm aufweisen.

2. Mittel in stückiger Form nach Anspruch 1, **dadurch gekennzeichnet, dass** das Eisenoxid und/oder Eisenoxidhydroxid $\alpha$-FeOOH ist.

3. Mittel in stückiger Form nach Anspruch 1 oder 2, **dadurch gekennzeichnet, dass** sie Nickel mit einem Gehalt von 120 ppm oder weniger aufweisen.

4. Mittel in stückiger Form nach einem oder mehreren der Ansprüche 1 bis 3, **dadurch gekennzeichnet, dass** sie Cadmium mit einem Gehalt von 1,5 ppm oder weniger aufweisen.

5. Mittel in stückiger Form nach einem oder mehreren der Ansprüche 1 bis 4, **dadurch gekennzeichnet, dass** sie Chrom(VI) mit einem Gehalt von 2 ppm oder weniger aufweisen.

6. Mittel in stückiger Form nach einem oder mehreren der Ansprüche 1 bis 5, **dadurch gekennzeichnet, dass** sie Thallium mit einem Gehalt von 1 ppm oder weniger aufweisen.

7. Mittel in stückiger Form nach einem oder mehreren der Ansprüche 1 bis 6, **dadurch gekennzeichnet, dass** sie einen Gehalt an perfluorierten Tensiden von 0,1 ppm oder weniger aufweisen.

8. Mittel nach einem oder mehreren der Ansprüche 1 bis 7, **dadurch gekennzeichnet, dass** sie eine spezifische Oberfläche von <50 m$^2$/g (BET) aufweisen.

9. Verwendung von Mitteln nach einem oder mehreren der Ansprüche 1 bis 8 zur Entfernung von Schwefelwasserstoff, anorganischen oder organischen Sulfiden aus flüssigen Medien.

10. Verwendung von Mitteln nach einem oder mehreren der Ansprüche 1 bis 8 zur Entfernung von Schwefelwasserstoff aus gasförmigen Medien.

11. Verwendung von Mitteln nach einem oder mehreren der Ansprüche 1 bis 8 zur Entfernung von Schwefelwasserstoff aus Biogas.

12. Verwendung von Mitteln nach einem oder mehreren der Ansprüche 1 bis 8 in Biogasfermentern.

13. Verfahren zur Abreicherung von Schwefelwasserstoff in Biogas umfassend zumindest das Inkontaktbringen eines Mittels nach einem oder mehreren der Ansprüche 1 bis 8 mit zu fermentierender Biomasse.

14. Mischung enthaltend Biomasse und Eisenoxid und/oder Eisenoxidhydroxid, **dadurch gekennzeichnet, dass** das Eisenoxid und/oder Eisenoxidhydroxid Spurenelementgehalte bezüglich Arsen von 80 ppm oder weniger, bezüglich Blei von 50 ppm oder weniger, und bezüglich Quecksilber von 1 ppm oder weniger, aufweist.

15. Verwendung der Mischung nach Anspruch 14 als Dünger.

Europäisches
Patentamt

European
Patent Office

Office européen
des brevets

## EUROPÄISCHER RECHERCHENBERICHT

Nummer der Anmeldung

EP 10 18 7738

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ANONYMOUS: "SORB 33® Arsenic Removal Systems Bayoxide® Media Handling and Disposal -Frequently Asked Questions", SEVERN TRENT SERVICES , 1. Mai 2009 (2009-05-01), XP002635062, [gefunden am 2011-04-28] | 1-8 | INV. C05D9/00 B01J20/06 B01J20/28 B01D53/14 C02F1/28 C10L3/10 |
| Y | * das ganze Dokument * | 14,15 | |
| X | & ANONYMOUS: "Bayoxide® E33PDatasheet - Media Summary", SEVERN TRENT SERVICES , 1. Mai 2009 (2009-05-01), XP002635067, [gefunden am 2011-04-28] | 1-8 | |
| Y | * das ganze Dokument * ----- | 14,15 | |
| X | DE 101 15 415 A1 (BAYER AG [DE]) 2. Oktober 2002 (2002-10-02) | 1-8 | |
| Y | * Anspruch 1 * * Absätze [0036] - [0037], [0054] * ----- | 11-13 | |
| X | EP 1 582 505 A1 (LANXESS DEUTSCHLAND GMBH [DE]) 5. Oktober 2005 (2005-10-05) * Absätze [0005] - [0006] * * Ansprüche 1,7,8,10,13,14 * ----- | 1-12 | RECHERCHIERTE SACHGEBIETE (IPC) B01J B01D C02F C05D C10L |
| Y | N. ABATZOGLOU, S. BOIVIN: "A review of biogas purification processes", BIOFUELS, BIOPROD. BIOREF., Bd. 3, Nr. 1, 8. Dezember 2008 (2008-12-08), Seiten 42-71, XP002635063, * Seite 46 - Seite 49 * ----- | 11-13 | |
|  | -/-- | | |

Der vorliegende Recherchenbericht wurde für alle Patentansprüche erstellt

| Recherchenort | Abschlußdatum der Recherche | Prüfer |
|---|---|---|
| Den Haag | 10. Mai 2011 | Kaluza, Nicoleta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

| | Europäisches Patentamt European Patent Office Office européen des brevets | **EUROPÄISCHER RECHERCHENBERICHT** | **Nummer der Anmeldung** EP 10 18 7738 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DATABASE WPI<br>Week 199801<br>Thomson Scientific, London, GB;<br>AN 1998-002866<br>XP002635064,<br>-& JP 9 268093 A (FE SEKKAI KOGYOSHO KK)<br>14. Oktober 1997 (1997-10-14)<br>* Zusammenfassung *<br>* Absatz [0032] *<br>* Ansprüche 1-6 *<br>----- | 14,15 | |
| T | Böhland, T., Brandt, K., Brussaard, H., Calvert, D., Etzrodt, G., Rieck, H., Seeger, O., Wienand, H., Wiese, J. and Buxbaum, G.: "Colored Pigments"<br>In: G. Buxbaum and G. Pfaff: "Industrial Inorganic Pigments",<br>13. Mai 2005 (2005-05-13), Wiley-VCH, Weinheim, XP002635065,<br>ISBN: 3-527-30363-4<br>Seiten 99-162,<br>* 3.1 Oxides and Hydroxides, page 105 *<br>----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 10. Mai 2011 | Kaluza, Nicoleta |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 18 7738

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2011

| Im Recherchenbericht angeführtes Patentdokument | Datum der Veröffentlichung | Mitglied(er) der Patentfamilie | Datum der Veröffentlichung |
|---|---|---|---|
| DE 10115415 A1 | 02-10-2002 | KEINE | |
| EP 1582505 A1 | 05-10-2005 | AT 399147 T<br>CN 1689694 A<br>DE 102004016601 A1<br>ES 2308326 T3<br>JP 2005288439 A<br>US 2005247636 A1 | 15-07-2008<br>02-11-2005<br>13-10-2005<br>01-12-2008<br>20-10-2005<br>10-11-2005 |
| JP 9268093 A | 14-10-1997 | JP 2943099 B2 | 30-08-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10204488 A1

**In der Beschreibung aufgeführte Nicht-Patentliteratur**

- Industrial Inorganic Pigments. Wiley Verlag GmbH & Co. KGaA, 2005